# EUROPEAN PATENT APPLICATION

(11) **EP 4 582 787 A1**
(43) Date of publication of application: **09.07.2025**
(21) Application number: 24223847.5
(22) Date of filing: 31.12.2024
(51) Int. Cl.: G01N 3/04, A61C 19/04, G01N 3/42

(54) **TEST APPARATUS FOR DENTURE PROCESSING**

(30) Priority: 03.01.2024 CN 202410006585
(71) Applicant: Shenzhen Yurucheng Dental Materials Co., Ltd., Shenzhen 518000 (CN)
(72) Inventor: LI, Zongyu, Shenzhen, 518000 (CN); LIU, Wei, Shenzhen, 518000 (CN); LIU, Jianjun, Shenzhen, 518000 (CN); ZHANG, Yu, Shenzhen, 518000 (CN); HU, Jizong, Shenzhen, 518000 (CN)
(74) Representative: Monteiro Alves, Inês

(57) **Abstract**

Disclosed is a test apparatus for denture processing, including a carrying mechanism provided on a placement surface, a hardness test mechanism, an internal support mechanism, a stop mechanism, a drive mechanism and a transmit mechanism. The internal support mechanism is configured to clamp a to-be-test denture and includes a threaded shaft (2), an internal support member and a main shaft (1). The internal support member is slidably connected to the carrying mechanism along a first direction and is at least partially provided in the carrying mechanism. The threaded shaft (2) is provided with two thread portions with opposite rotation directions, the thread portions and the internal support members are in a one-to-one correspondence, part of the internal support member provided in the carrying mechanism is threaded with the thread portion, and the threaded shaft (2) is connected to the main shaft (1) through a damping bearing (3).

## Description

### TECHNICAL FIELD

The present application relates to the technical field of denture processing, and in particular to a test apparatus for denture processing.

### BACKGROUND

The denture is what people often call "fake teeth", just like "fake legs" and "fake limb" are called "artificial limbs". "Denture" means teeth that fulfill "duties" for humans. In medicine, it is a general term for restorations made after partial or complete tooth loss in the upper and lower teeth. The denture is divided into the removable type and the fixed type. The fixed denture (commonly known as "fixed fake teeth") cannot be taken out and worn by the patient himself, while the removable denture (commonly known as "removable fake teeth") can be taken out and worn by the patient conveniently. The removable denture is commonly known as "removable partial denture", which refers to a restoration that is supported by the remaining natural teeth in the oral cavity, the mucosa, and the alveolar bone covered by the base (dental tray), and can be taken out and worn by the patient himself. The "removable fake teeth" are used to achieve retention and stability with the help of components such as the denture retainer and the base to repair missing teeth and adjacent soft and hard tissues, which is a method of repairing missing teeth.

Ceramics are often made of non-silicate chemical raw materials or artificial synthetic raw materials, such as oxides (aluminum oxide, zirconium oxide, titanium oxide, etc.) and non-oxides (silicon nitride, boron carbide, etc.). Zirconia ceramics have many advantages such as excellent insulation, corrosion resistance, high temperature resistance, high hardness, low density, and radiation resistance, which have been widely used in various fields of the national economy, specifically in the production of ceramic dentures.

The measurement strength of the denture is to ensure that the denture can withstand the normal bite and chewing force in the mouth during use. The purpose of the tensile strength of the denture groove from the inside to the outside is to determine the durability and stability of the denture groove when subjected to chewing and biting forces. By measuring the tensile strength of the denture groove, it is possible to evaluate whether the groove can withstand external forces under normal use conditions, as well as its stability to the teeth and surrounding tissues, which is of great significance for designing and manufacturing high-quality dentures that meet individual oral anatomy and functional requirements, so as to ensure the comfortable, stable and lasting denture restoration effects.

The traditional denture test apparatus is not convenient for positioning the denture, which only clamps the denture by two pressing plates, and presses down through the hardness test mechanism to perform hardness test. This is easy to cause shaking during the test, which is inconvenient to observe directly through contact of the pressing plate and the denture. The test accuracy is low, and it does not have the function of testing the tensile strength of the denture groove from the inside to the outside, thus the function is relatively single. If the tensile strength of the denture groove needs to be tested, the denture needs to be moved to the tensile strength test device and clamped before testing, and the test efficiency is low.

### SUMMARY

The purpose of the present application is to provide a test apparatus for denture processing, improve the stability of clamping, avoid affecting the test accuracy, and test the tensile strength without moving the denture, reduce the operation steps, improve the convenience and improve the test efficiency.

To achieve the above objectives, the present application provides a test apparatus for denture processing, including a carrying mechanism provided on a placement surface, a hardness test mechanism, an internal support mechanism, a stop mechanism, a drive mechanism and a transmit mechanism.

In an embodiment, the internal support mechanism is configured to clamp a to-be-test denture and includes a threaded shaft rotatably connected in the carrying mechanism, an internal support member and a main shaft, the internal support member is slidably connected to the carrying mechanism along a first direction and is at least partially provided in the carrying mechanism, the threaded shaft is provided with two thread portions with opposite rotation directions, the thread portions and the internal support members are in a one-to-one correspondence, part of the internal support member provided in the carrying mechanism is threaded with the thread portion, and the threaded shaft is connected to the main shaft through a damping bearing.

In an embodiment, the stop mechanism includes a trigger member and a stop member provided in the threaded shaft and configured for limiting the connection between the threaded shaft and the main shaft.

In an embodiment, the trigger member includes a fixation portion fixedly provided at the main shaft and a trigger portion, and one end of the trigger portion is slidably connected to the threaded shaft.

In an embodiment, the trigger portion is provided with a first position and a second position, in response to being in the first position, the trigger portion is in contact with the fixation portion, and the stop member is configured to limit the connection between the threaded shaft and the main shaft; and in response to being in the second position, the trigger portion is spaced from the fixation portion, and the stop member is configured to release the limit on the connection between the threaded shaft and the main shaft.

In an embodiment, a fixation end of the hardness test mechanism is fixedly provided on the carrying mechanism and is provided on one side of the internal support mechanism, and a test end of the hardness test mechanism is towards the internal support mechanism, so as to test the denture provided on the internal support mechanism.

In an embodiment, the drive mechanism is provided on the carrying mechanism and is provided on the side of the internal support mechanism, and an output end of the drive mechanism is connected to the main shaft through a transmit mechanism, so as to drive the main shaft to rotate.

In an embodiment, the carrying mechanism includes a bottom plate and a carrying platform fixedly provided on a surface of the bottom plate, the internal support member is slidably connected to the carrying platform and is at least partially provided in the carrying platform, the fixation end of the hardness test mechanism is fixedly provided on the surface of the bottom plate and is provided on one side of the internal support member, and the drive mechanism is provided on the surface of the bottom plate and is provided on the side of the internal support member.

In an embodiment, the internal support member includes a clamping plate slidably connected to the carrying platform through a sliding slot and at least partially provided in the carrying platform, a support plate fixedly provided on a surface of the clamping plate and in contact with the carrying platform, and an adjustment block slidably connected to a surface of the clamping plate provided in the carrying platform through the sliding slot, so that the adjustment block is configured to slide in a second direction, and a surface of the adjustment block is threaded with the threaded shaft through a thread hole.

In an embodiment, the test apparatus for denture processing further includes an expansion plate detachably connected to the clamping plate, a plurality of first locking blocks are provided on the surface of the clamping plate, a plurality of lock slots cooperated with the first locking blocks are provided on a surface of the expansion plate towards the plurality of the first locking blocks, a plurality of second locking blocks are provided on a surface of the expansion plate away from the plurality of the lock slots, and all surfaces of the first locking blocks and surfaces of the second locking blocks towards the support plate are sloped.

In an embodiment, the stop member includes a magnet provided in the threaded shaft and on one side of the damping bearing and an electromagnet provided on a surface of the main shaft and on one side of the damping bearing corresponding to the magnet, and a surface of the electromagnet towards the magnet is in an arc shape and is in contact with the magnet.

In an embodiment, the trigger portion includes a first contact, a trigger cylinder and a positioning rod, an end surface of the threaded shaft is slidably connected to the positioning rod through a through hole, one end of the trigger cylinder is fixedly connected to the positioning rod, another end of the trigger cylinder is threaded to the main shaft through a thread hole, the first contact is provided on an inner wall of the thread hole, the fixation portion includes a second contact fixedly provided on the surface of the main shaft, in response to that the trigger portion is in the first position, the first contact and the second contact are in contact, and a positive electrode of a power supply, the first contact, the second contact, the electromagnet and a negative electrode of the power supply are connected in series in sequence.

In an embodiment, the test apparatus for denture processing further includes a third contact provided on a surface of one of the internal support members towards the carrying mechanism and a fourth contact correspondingly provided at the carrying mechanism, wherein the third contact and the fourth contact are connected in series between the positive electrode of the power supply and the first contact.

In an embodiment, the hardness test mechanism includes a support member, a push member, a pressure gauge, a camera, a support rod and a pressure head, one end of the support member is fixedly provided on the surface of the bottom plate and is provided on one side of the internal support member, the push member is fixedly provided on another end of the support member, an output end of the push member is towards the internal support mechanism, the support rod is provided at the output end of the push member, one end of the pressure gauge is provided at one end of the support rod away from the push member, the camera is provided on a surface of the support rod through a cross bar, the pressure head is fixedly provided on another end of the pressure gauge, and the push member is configured to push the support rod to move towards the internal support mechanism.

In an embodiment, the push member includes a hydraulic pump fixedly provided at the other end of the support member, an output end of the hydraulic pump is towards the internal support mechanism, and the support rod is provided at the output end of the hydraulic pump.

In an embodiment, the transmit mechanism includes a worm gear provided in the carrying mechanism and is fixedly provided with an end face of the main shaft and a worm rod provided in the carrying mechanism, one end of the worm rod is fixedly connected to the output end of the drive mechanism, and a surface of the worm gear is meshed with a surface of the worm rod.

The present application provides a test apparatus for denture processing, which has the following beneficial effects:

In the test apparatus for denture processing, the rotation of the main shaft can drive the threaded shaft to rotate through the damping bearing, and the rotation of the threaded shaft can make the two internal support members move in opposite directions along the first direction through the two thread portions. The internal support member is abutted against the groove wall of the tooth crown of the denture close to the buccal and lingual surface or the contact surface for internal support clamp. After pressed against and clamped, the threaded shaft overcomes the friction force of the damping bearing and remains fixed. At the same time, because of the friction force of the damping bearing, the threaded shaft maintains a certain rotation force, so that the internal support member continues to press against the denture crown groove. When the hardness test is performed on the occlusal surface of the denture through the hardness test mechanism, the shaking or accidental falling of the denture is effectively avoided to affect the test. When the hardness test is completed, the stop member is driven by the trigger member to operate to limit the connection between the threaded shaft and the main shaft, and the main shaft applies rotation force to the threaded shaft. When increasing the power of the drive mechanism, the force of the internal support member is increased. The tensile strength of the denture crown groove close to the buccal and lingual surface or close to the contact surface is tested without changing the clamp. The operating steps of replacing clamps and apparatuses are reduced, multiple test methods are realized, and the test efficiency is effectively improved.

### BRIEF DESCRIPTION OF THE DRAWINGS

FIG. 1 is a schematic three-dimensional structural diagram of a test apparatus for denture processing according to an embodiment of the present application.
FIG. 2 is a schematic cross-sectional structural diagram of the test apparatus for denture processing according to an embodiment of the present application.
FIG. 3 is a schematic exploded structural diagram of an internal support mechanism according to an embodiment of the present application.

In the drawings: 1, main shaft; 2, threaded shaft; 3, damping bearing; 4, bottom plate; 5, carrying platform; 6, clamping plate; 7, support plate; 8, adjustment block; 9, expansion plate; 10, first locking block; 11, second locking block; 12, electromagnet; 13, magnet; 14, first contact; 15, trigger cylinder; 16, positioning rod; 17, second contact; 18, third contact; 19, fourth contact; 20, pressure gauge; 21, camera; 22, support rod; 23, pressure head; 24, hydraulic pump; 25, worm gear; 26, worm rod.

### DETAILED DESCRIPTION OF THE EMBODIMENTS

The technical solution in the embodiments of the present application is described clearly and completely with reference to the accompanying drawings. Based on the embodiments of the present application, all other embodiments obtained by those skilled in the art without creative efforts shall fall within the scope of the present application.

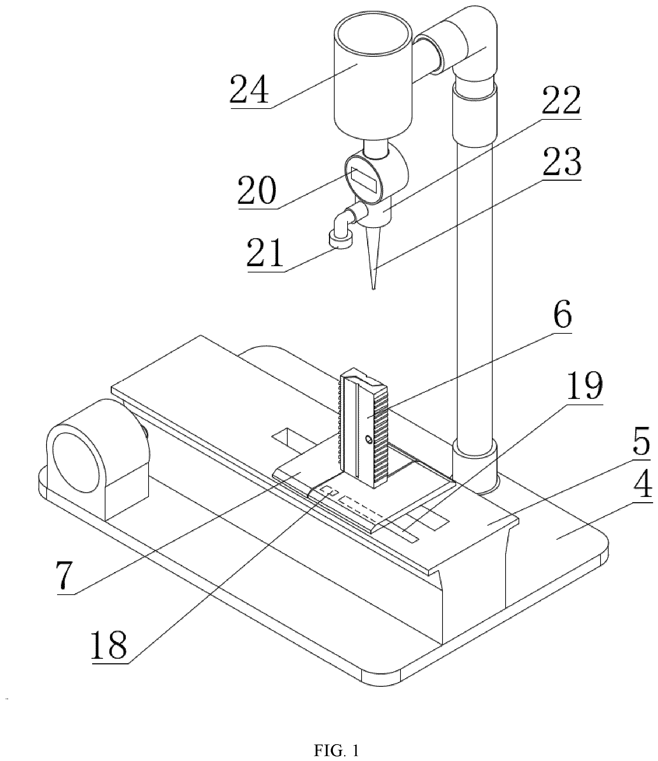

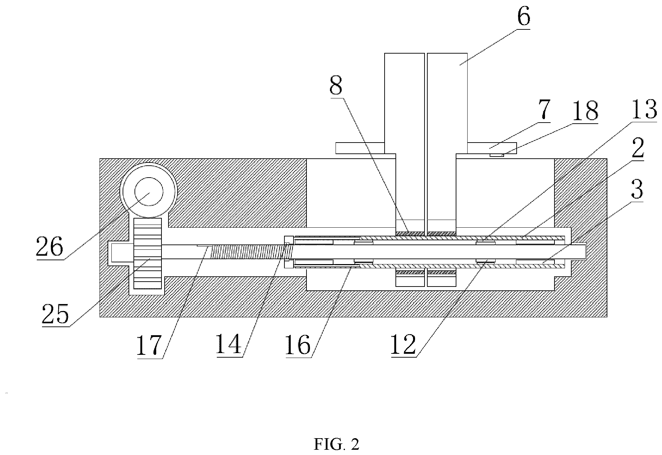

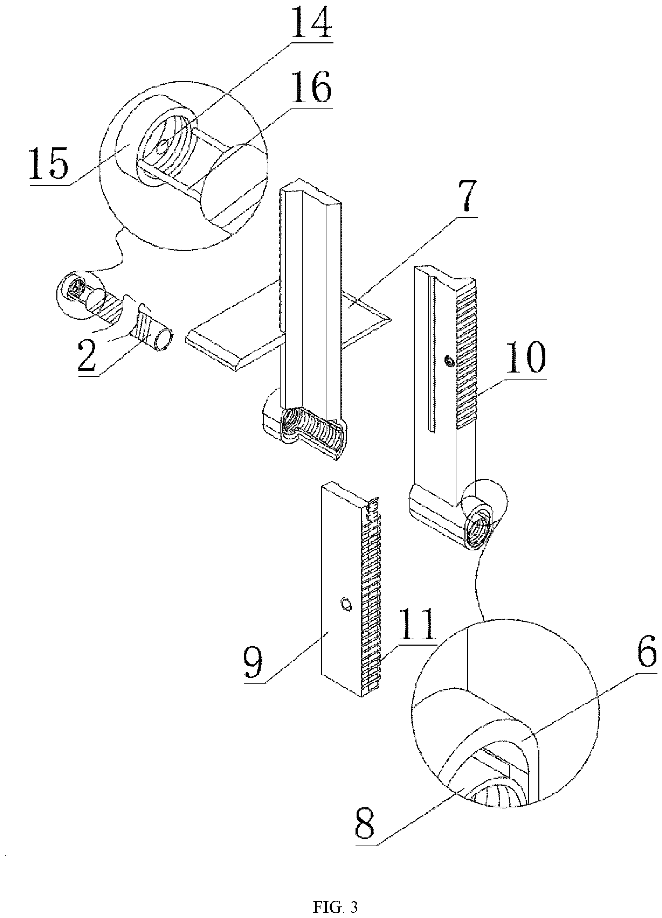

Referring to FIG. 1 to FIG. 3, the present application provides a test apparatus for denture processing, including a carrying mechanism, a hardness test mechanism, an internal support mechanism, a stop mechanism, a drive mechanism and a transmit mechanism.

The carrying mechanism is provided on a placement surface.

The internal support mechanism is configured to clamp the to-be-test denture, and includes a threaded shaft 2, an internal support member and a main shaft 1. The internal support member is slidably connected to the carrying mechanism along a first direction and is at least partially located in the carrying mechanism. The threaded shaft 2 is rotatably connected in the carrying mechanism, and two thread portions with opposite rotation directions are provided on the threaded shaft 2. The thread portion and the internal support member are in a one-to-one correspondence, the part of the internal support member located in the carrying mechanism is threaded with the thread portion, and the threaded shaft 2 is connected to the main shaft 1 through a damping bearing 3.

The stop mechanism includes a stop member and a trigger member. The stop member is provided in the threaded shaft 2, and is configured to limit the connection between the threaded shaft 2 and the main shaft 1.

The trigger member includes a fixation portion and a trigger portion. The fixation portion is fixedly provided on the main shaft 1, and one end of the trigger portion is slidably connected to the threaded shaft 2.

The trigger portion is provided with a first position and a second position. When in the first position, the trigger portion is in contact with the fixation portion, the stop member is configured to limit the connection between the threaded shaft 2 and the main shaft 1; when in the second position, the trigger portion is spaced from the fixation portion, and the stop member is configured to release the connection between the threaded shaft 2 and the main shaft 1 to limit.

The fixation end of the hardness test mechanism is fixedly provided on the carrying mechanism and is located on one side of the internal support mechanism, and the test end of the hardness test mechanism is faced with the internal support mechanism so as to test the denture installed on the internal support mechanism.

The drive mechanism is provided on the carrying mechanism and is located on one side of the internal support mechanism, and the output end of the drive mechanism is connected to the main shaft 1 through the transmit mechanism, so as to drive the main shaft 1 to rotate.

The carrying mechanism plays an overall supporting role. The internal support member is connected to the threaded shaft 2, and the threaded shaft 2 is provided with two thread portions. Two internal support members are provided, one of which is threaded with one of the thread portions, and the other one of the thread portions is threaded with another internal support member. Through the opposite rotation directions of the thread portions, when the threaded shaft 2 is driven by the main shaft 1 for forward rotation, the internal support member can be driven to move in opposite directions at the same time; when the threaded shaft 2 is driven by the main shaft 1 for reverse rotation, the internal support member can be driven to move in the same direction at the same time. Through the connection between the threaded shaft 2 and the main shaft 1, when the main shaft 1 rotates, the threaded shaft 2 is driven to rotate through the damping bearing 3. When the internal support member contacts the groove wall of the denture tooth crown, the resistance is generated, so that the threaded shaft 2 overcomes the friction force of the damping bearing 3 and stops rotating. At the same time, the friction force of the damping bearing 3 is configured to keep the threaded shaft 2 with a certain rotation force, so that the internal support member continues to press against the groove wall of the denture tooth crown, which can play a compensatory role. Since the groove wall of the denture tooth crown and the outer surface of the denture is not flat, it is prone to shake during the hardness test after clamping the outer surface of the denture with an ordinary fixture, thus affecting the test process.

The connection between the main shaft 1 and the threaded shaft 2 can be limited through the stop member, so that the main shaft 1 can continuously drive the threaded shaft 2 to rotate, thereby preventing the threaded shaft 2 from stop rotating. By increasing the power of the drive mechanism, the rotation force of the threaded shaft 2 is increased to increase the force of the internal support member, so as to test the tensile strength of the denture. The tensile strength test determines the durability and stability of the denture groove when subjected to chewing and biting forces. By measuring the tensile strength of the denture groove, it can be evaluated whether the groove can withstand external forces under normal use conditions, as well as its stability to the teeth and surrounding tissues. Through the trigger member, when in the second position, the trigger portion is spaced apart from the fixation portion. The stop member releases the limit to the connection between the threaded shaft 2 and the main shaft 1, and the threaded shaft 2 stops rotating when overcoming the friction of damping bearing 3.

The hardness test mechanism is configured to perform hardness test on the to-be-test denture clamped on the internal support mechanism. The transmit mechanism can transmit the force of drive mechanism to the main shaft 1. By setting a power standard value, the tensile strength of the denture can be determined by comparing the power value of the drive mechanism when tearing the denture. The groove wall of the tooth crown close to the buccal and lingual surface or close to the contact surface can be tested.

In this embodiment, the carrying mechanism includes a bottom plate 4 and a carrying platform 5. The carrying platform 5 is fixedly provided on the surface of the bottom plate 4. The internal support member is slidably connected to the carrying platform 5 and is at least partially located inside the carrying platform 5. The fixation end of the hardness test mechanism is fixedly provided on the surface of the bottom plate 4 and is located on one side of the internal support member. The drive mechanism is provided on the surface of the bottom plate 4 and is located on one side of the internal support member. The internal support member can slide on the carrying platform 5 through the connection between the carrying platform 5 and the internal support member. The bottom plate 4 is configured to support the carrying platform 5 through the connection between the bottom plate 4 and the carrying platform 5. The bottom plate 4 is configured to support the fixation end of the hardness test mechanism through the connection between the bottom plate 4 and the fixation end of the hardness test mechanism.

In this embodiment, the internal support member includes a clamping plate 6, a support plate 7 and an adjustment block 8. The support plate 7 is fixedly provided on the surface of the clamping plate 6 and is in contact with the carrying platform 5. The carrying platform 5 is slidably connected to the clamping plate 6 through a sliding slot, and the clamping plate 6 is at least partially located in the carrying platform 5. The surface of the clamping plate 6 located in the carrying platform 5 is slidably connected to the adjustment block 8 through a sliding slot, so that the adjustment block 8 can slide along the second direction. The surface of the adjustment block 8 is threaded with the threaded shaft 2 through a thread hole, the support plate 7 is in contact with the carrying platform 5 through the connection between the clamping plate 6 and the support plate 7, so that the stability of the clamping plate 6 is assisted to be improved. The adjustment block 8 can slide on the clamping plate 6 along the second direction through the connection between the clamping plate 6 and the adjustment block 8, so as to play an auxiliary compensation role, and prevent the pressure applied to the clamping plate 6 from being passed to the threaded shaft 2 during the hardness test to the denture after the clamping plate 6 is clamped with the denture, thereby increasing the wear among the threaded shaft 2, the main shaft 1, the damping bearing 3 and the stop mechanism. The rotation of the threaded shaft 2 can drive the adjustment block 8 to rotate through the connection between the adjustment block 8 and the threaded shaft 2.

In the present application, an expansion plate 9 is also included. The expansion plate 9 is detachably connected to the clamping plate 6. A plurality of first locking blocks 10 are provided on the surface of the clamping plate 6. A plurality of lock slots cooperated with the first locking block 10 are provided on the surface of the expansion plate 9 facing the first locking block 10. A plurality of second locking blocks 11 are provided on the surface of the expansion plate 9 away from the lock slot. The surfaces of the first locking block 10 and the second locking block 11 facing the support plate 7 are both sloped. The lock slot and the first locking block 10 can ensure that the expansion plate 9 and the clamping plate 6 are firmly fixed, so as to avoid loosening and movement, and facilitate users to quickly adjust and replace. This design can improve work efficiency and accuracy, and increase work flexibility and diversity. The first locking block 10 can increase the friction force with the groove wall of the denture tooth crown, and the stability is further improved. At the same time, the purpose of matching the expansion plate 9 is that the area of the buccal and lingual surface of the denture is larger than the area of the contact surface. When it needs to press against and clamp the groove wall of the tooth crown of the denture close to the buccal and lingual surface, the expansion plate 9 can be installed to increase the force-bearing area to prevent the denture from being directly ruptured at the clamping plate 6 position due to high pressure.

A thread rod is provided at the connection between the expansion plate 9 and the clamping plate 6, and a through hole is provided on the surface of the expansion plate 9 to match the thread rod. The surface of the clamping plate 6 is threaded with the surface of the expansion plate 9 that the thread rod passes through by the thread hole, which is configured to limit the connection between the expansion plate 9 and the clamping plate 6.

In this embodiment, the stop member includes an electromagnet 12 and a magnet 13. The magnet 13 is provided in the threaded shaft 2 and is located on one side of the damping bearing 3. The electromagnet 12 is provided on the surface of the main shaft 1 and is located on one side of the damping bearing 3 corresponding to the magnet 13. The surface of the electromagnet 12 facing the magnet 13 is in an arc shape and is in contact with the magnet 13. Through the connection between the electromagnet 12 and the magnet 13, when the electromagnet 12 is energized and magnetic, an adsorption force is generated to cooperate with the magnet 13 to adsorb the clamp. The magnet 13 is distributed in a ring shape in the threaded shaft 2. The adsorption force of the electromagnet 12 and the magnet 13 is strong enough to overcome the resistance brought by the internal support member, and to support the internal support member to perform a tensile strength test on the denture.

In this embodiment, the trigger portion includes a first contact 14, a trigger cylinder 15 and a positioning rod 16. An end surface of the threaded shaft 2 is slidably connected to the positioning rod 16 through an opened through hole. One end of the trigger cylinder 15 is fixedly connected to the positioning rod 16, and the other end of the trigger cylinder 15 is threaded with the main shaft 1 through an opened thread hole. The first contact 14 is provided on the inner wall of the thread hole. The fixation portion includes a second contact 17 fixedly provided on the surface of the main shaft 1. When the trigger portion is located at a first position, the first contact 14 and the second contact 17 are attached, the positive electrode of the power supply, the first contact 14, the second contact 17, the electromagnet 12 and the negative electrode of the power supply are connected in series in sequence. The positioning rod 16 can slide along a certain direction on the threaded shaft 2 through the connection between the positioning rod 16 and the threaded shaft 2. The trigger cylinder 15 can rotate along with the positioning rod 16 along with the threaded shaft 2 through the connection between the trigger cylinder 15 and the positioning rod 16. When the threaded shaft 2 is not rotated, the trigger cylinder 15 also stops rotating. Through the connection between the trigger cylinder 15 and the main shaft 1, when the threaded shaft 2 is not rotated, the thread of the trigger cylinder 15 cooperated with the main shaft 1 makes the trigger cylinder 15 move away from the threaded shaft 2 along the first direction until the trigger cylinder 15 moves to the first contact 14 and contacts the second contact 17 to energize the electromagnet 12. The threaded shaft 2 is driven to rotate through the main shaft 1. At the same time, the trigger cylinder 15 is driven to rotate synchronously by the threaded shaft 2. The thread between the main shaft 1 and the trigger cylinder 15 is relatively thin, so that the path of the thread is relatively long, which is sufficient to support the completion of the hardness test to the denture.

In this embodiment, a third contact 18 and a fourth contact 19 are further included. The third contact 18 is provided on a surface of one of the internal support members towards the carrying mechanism, and the fourth contact 19 is correspondingly provided on the carrying mechanism. The third contact 18 and the fourth contact 19 are connected in series between the positive electrode of the power supply and the first contact 14. When the internal support member provided with the third contact 18 moves with the rotation of the threaded shaft 2 and is in contact with the fourth contact 19, since the length of the fourth contact 19 is greater than the length of the denture, it will not affect the situation that the third contact 18 and the fourth contact 19 are disconnected when the tensile strength test is performed. When the third contact 18 is reversed and reset along with the internal support member through the threaded shaft 2, the third contact 18 and the fourth contact 19 are disconnected. Through the third contact 18 and the fourth contact 19, when the tensile strength test is performed, the internal support member moves. At this time, the third contact 18 and the fourth contact 19 are closed. When the first contact 14 is in contact with the second contact 17, the electromagnet 12 is energized and magnetized. When the third contact 18 is disconnected with the fourth contact 19, the circuit is disconnected, and the electromagnet 12 is powered off and demagnetized. The threaded shaft 2 overcomes the friction of the damping bearing 3 and remains motionless, and the trigger cylinder 15 is reset with the reverse rotation of the main shaft 1 until the next test, which can reduce the operation steps and operate automatically, without the need to control the power on or off of the electromagnet 12 separately, and avoid the aging speed of the main shaft 1, drive mechanism and threaded shaft 2 when the operation is omitted, so as to prevent the damage to the main shaft 1 or the threaded shaft 2.

In this embodiment, the hardness test mechanism includes a support member, a push member, a pressure gauge 20, a camera 21, a support rod 22 and a pressure head 23. One end of the support member is fixedly provided on the surface of the bottom plate 4 and is located on one side of the internal support member. The push member is fixedly provided on the other end of the support member, and the output end of the push member is towards the internal support mechanism. The support rod 22 is provided at the output end of the push member. One end of the pressure gauge 20 is provided at the end of the support rod 22 away from the push member. The camera 21 is provided on the surface of the support rod 22 through a cross bar. The pressure head 23 is fixedly provided on the other end of the pressure gauge 20. The push member is configured to push the support rod 22 to move towards the internal support mechanism. The camera 21 is a digital microscope camera 21, which is known in the related art and is used in hardness meters. It is only cited here without improvement, and the purpose is to test the indentation depth of the occlusal surface of the inspected denture. At the same time, the data is transmitted to the display for the test personnel to check. Through the hardness of the occlusal surface with indentation and the action of the pressure gauge 20, it is convenient to timely check the pressure applied to the denture. At the same time, the support rod 22 can push the pressure head 23 to move to produce an indentation. The push member pushes the support rod 22 to move toward the internal support mechanism through the connection between the push member and the support rod 22.

In this embodiment, the push member includes a hydraulic pump 24 fixedly provided at the other end of the support member. The output end of the hydraulic pump 24 is towards the internal support mechanism. The support rod 22 is provided at the output end of the hydraulic pump 24. The hydraulic pump 24 is known in the related art, which is only cited here without improvement, so it will not be described in detail. The purpose is to push the support rod 22 to move towards the internal support mechanism.

In this embodiment, the transmit mechanism includes a worm gear 25 and a worm rod 26. The worm gear 25 is provided in the carrying mechanism and fixedly provided with the end face of the main shaft 1. The worm rod 26 is provided in the carrying mechanism, and the end of the worm rod 26 is fixedly connected to the output end of the drive mechanism. The surface of the worm gear 25 is meshed with the surface of the worm rod 26. The worm gear 25 and the worm rod 26 are known in the related art, which are only cited here without improvement. The purpose is to transmit the force output by the drive mechanism and control the rotation of the main shaft 1.

In this embodiment, the drive mechanism is a drive motor, which is known in the related art and is only cited here without improvement. The purpose is to generate the power of rotation and increase the power of the drive motor to test the tensile strength.

When in use, the to-be-test denture is driven by the drive mechanism and the transmit mechanism to drive the threaded shaft 2 to rotate through the damping bearing 3, and the threaded shaft 2 is cooperated with the adjustment block 8 to drive the clamping plate 6 to move, so as to press against and clamp the groove wall of the tooth crown of the to-be-test denture. At the same time, the third contact 18 is connected with the fourth contact 19. At this time, the threaded shaft 2 overcomes the friction of the damping bearing through the resistance transmitted by the clamping plate 6, and the main shaft 1 keeps rotating. The trigger cylinder 15 moves through the thread connection with the main shaft 1. At this time, since the denture is clamped, the strength test can be performed. The hardness of the occlusal surface of the denture can be calculated through the indentation observed by the camera 21 and the pressure gauge 20. After the test is completed, in the process of calculating the hardness, the trigger cylinder 15 moves to the first contact 14 and the second contact 17, and the electromagnet 12 is energized and magnetized, so that the main shaft 1 drives the threaded shaft 2 to move. The threaded shaft 2 cannot rotate due to the resistance transmitted by the clamping plate 6. At this time, the power of drive motor is increased to transmit force to the clamping plate 6 through the threaded shaft 2 until the to-be-test denture is torn. The power at that time can be compared with the standard value of power to obtain the tensile strength of the denture.

The electrical components in the present application are all connected to the external main controller and 220V mains electricity, and the main controller can be a conventional known device that controls a computer.

Although the embodiments of the present application have been shown and described, for those skilled in the art, various changes, modifications, substitutions and variations can be made to these embodiments without departing from the principles and spirit of the present application, and the scope of the present application is defined by the attached claims and their equivalents.

## Claims

1. A test apparatus for denture processing, **characterized by** comprising a carrying mechanism provided on a placement surface, a hardness test mechanism, an internal support mechanism, a stop mechanism, a drive mechanism and a transmit mechanism; wherein
the internal support mechanism is configured to clamp a to-be-test denture and comprises a threaded shaft (2) rotatably connected in the carrying mechanism, an internal support member and a main shaft (1), the internal support member is slidably connected to the carrying mechanism along a first direction and is at least partially provided in the carrying mechanism, the threaded shaft (2) is provided with two thread portions with opposite rotation directions, the thread portions and the internal support members are in a one-to-one correspondence, part of the internal support member provided in the carrying mechanism is threaded with the thread portion, and the threaded shaft (2) is connected to the main shaft (1) through a damping bearing (3);
the stop mechanism comprises a trigger member and a stop member provided in the threaded shaft (2) and configured for limiting the connection between the threaded shaft (2) and the main shaft (1);
the trigger member comprises a fixation portion fixedly provided at the main shaft (1) and a trigger portion, and one end of the trigger portion is slidably connected to the threaded shaft (2);
the trigger portion is provided with a first position and a second position, in response to being in the first position, the trigger portion is in contact with the fixation portion, and the stop member is configured to limit the connection between the threaded shaft (2) and the main shaft (1); and in response to being in the second position, the trigger portion is spaced from the fixation portion, and the stop member is configured to release the limit on the connection between the threaded shaft (2) and the main shaft (1);
a fixation end of the hardness test mechanism is fixedly provided on the carrying mechanism and is provided on one side of the internal support mechanism, and a test end of the hardness test mechanism is towards the internal support mechanism, so as to test the denture provided on the internal support mechanism; and
the drive mechanism is provided on the carrying mechanism and is provided on the side of the internal support mechanism, and an output end of the drive mechanism is connected to the main shaft (1) through a transmit mechanism, so as to drive the main shaft (1) to rotate.

2. The test apparatus for denture processing according to claim 1, wherein the carrying mechanism comprises a bottom plate (4) and a carrying platform (5) fixedly provided on a surface of the bottom plate (4), the internal support member is slidably connected to the carrying platform (5) and is at least partially provided in the carrying platform (5), the fixation end of the hardness test mechanism is fixedly provided on the surface of the bottom plate (4) and is provided on one side of the internal support member, and the drive mechanism is provided on the surface of the bottom plate (4) and is provided on the side of the internal support member.

3. The test apparatus for denture processing according to claim 2, wherein the internal support member comprises a clamping plate (6) slidably connected to the carrying platform (5) through a sliding slot and at least partially provided in the carrying platform (5), a support plate (7) fixedly provided on a surface of the clamping plate (6) and in contact with the carrying platform (5), and an adjustment block (8) slidably connected to a surface of the clamping plate (6) provided in the carrying platform (5) through the sliding slot, so that the adjustment block (8) is configured to slide in a second direction, and a surface of the adjustment block (8) is threaded with the threaded shaft (2) through a thread hole.

4. The test apparatus for denture processing according to claim 3, further comprising an expansion plate (9) detachably connected to the clamping plate (6), wherein a plurality of first locking blocks (10) are provided on the surface of the clamping plate (6), a plurality of lock slots cooperated with the first locking blocks (10) are provided on a surface of the expansion plate (9) towards the plurality of the first locking blocks (10), a plurality of second locking blocks (11) are provided on a surface of the expansion plate (9) away from the plurality of the lock slots, and all surfaces of the first locking blocks (10) and surfaces of the second locking blocks (11) towards the support plate (7) are sloped.

5. The test apparatus for denture processing according to claim 1, wherein the stop member comprises a magnet (13) provided in the threaded shaft (2) and on one side of the damping bearing (3) and an electromagnet (12) provided on a surface of the main shaft (1) and on one side of the damping bearing (3) corresponding to the magnet (13), and a surface of the electromagnet (12) towards the magnet (13) is in an arc shape and is in contact with the magnet (13).

6. The test apparatus for denture processing according to claim 5, wherein the trigger portion comprises a first contact (14), a trigger cylinder (15) and a positioning rod (16), an end surface of the threaded shaft (2) is slidably connected to the positioning rod (16) through a through hole, one end of the trigger cylinder (15) is fixedly connected to the positioning rod (16), another end of the trigger cylinder (15) is threaded to the main shaft (1) through a thread hole, the first contact (14) is provided on an inner wall of the thread hole, the fixation portion comprises a second contact (17) fixedly provided on the surface of the main shaft (1), in response to that the trigger portion is in the first position, the first contact (14) and the second contact (17) are in contact, and a positive electrode of a power supply, the first contact (14), the second contact (17), the electromagnet (12) and a negative electrode of the power supply are connected in series in sequence.

7. The test apparatus for denture processing according to claim 6, further comprising a third contact (18) provided on a surface of one of the internal support members towards the carrying mechanism and a fourth contact (19) correspondingly provided at the carrying mechanism, wherein the third contact (18) and the fourth contact (19) are connected in series between the positive electrode of the power supply and the first contact (14).

8. The test apparatus for denture processing according to claim 2, wherein the hardness test mechanism comprises a support member, a push member, a pressure gauge (20), a camera (21), a support rod (22) and a pressure head (23), one end of the support member is fixedly provided on the surface of the bottom plate (4) and is provided on one side of the internal support member, the push member is fixedly provided on another end of the support member, an output end of the push member is towards the internal support mechanism, the support rod (22) is provided at the output end of the push member, one end of the pressure gauge (20) is provided at one end of the support rod (22) away from the push member, the camera (21) is provided on a surface of the support rod (22) through a cross bar, the pressure head (23) is fixedly provided on another end of the pressure gauge (20), and the push member is configured to push the support rod (22) to move towards the internal support mechanism.

9. The test apparatus for denture processing according to claim 8, wherein the push member comprises a hydraulic pump (24) fixedly provided at the other end of the support member, an output end of the hydraulic pump (24) is towards the internal support mechanism, and the support rod (22) is provided at the output end of the hydraulic pump (24).

10. The test apparatus for denture processing according to claim 1, wherein the transmit mechanism comprises a worm gear (25) provided in the carrying mechanism and is fixedly provided with an end face of the main shaft (1) and a worm rod (26) provided in the carrying mechanism, one end of the worm rod (26) is fixedly connected to the output end of the drive mechanism, and a surface of the worm gear (25) is meshed with a surface of the worm rod (26).
